# EUROPÄISCHE PATENTSCHRIFT

(11) **EP 3 103 571 B1**
(45) Veröffentlichungstag und Bekanntmachung des Hinweises auf die Patenterteilung: **08.07.2020**
(21) Anmeldenummer: 16171464.7
(22) Anmeldetag: 26.05.2016
(51) Int. Cl.: B22F 3/10, B22F 3/22, B22F 5/00, B22F 5/04, F01D 5/14, F01D 9/02, F01D 9/04, B23P 15/02, B23P 15/04

(54) **VERFAHREN ZUR HERSTELLUNG EINES BAUTEILS EINER GASTURBINE DURCH METALLPULVERSPRITZGIESSEN**
METHOD FOR MANUFACTURING A COMPONENT OF A GAS TURBINE BY METAL POWDER INJECTION MOULDING
PROCÉDÉ DE FABRICATION D'UN COMPOSANT D'UNE TURBINE À GAZ PAR MOULAGE PAR INJECTION DE POUDRE MÉTALLIQUE

(30) Priorität: 12.06.2015 DE 102015210770
(43) Veröffentlichungstag der Anmeldung: 14.12.2016
(73) Patentinhaber: Rolls-Royce Deutschland Ltd & Co KG, 15827 Blankenfelde-Mahlow (DE)
(72) Erfinder: HEINRICH, Roland, 15827 Blankenfelde-Mahlow (DE)
(74) Vertreter: Maikowski & Ninnemann Patentanwälte Partnerschaft mbB

(56) Entgegenhaltungen:
- EP-A1- 1 156 189
- DE-A1- 10 331 397
- DE-A1- 10 331 599
- DE-A1- 10 343 780
- FR-B1- 2 944 721
- US-A1- 2009 304 497
- US-A1- 2015 093 249

## Beschreibung

Die Erfindung betrifft ein Verfahren zur Herstellung eines Bauteils einer Gasturbine durch Metallpulverspritzgießen gemäß dem Oberbegriff des Anspruchs 1.

Aus der DE 10 2012 206 087 A1 ist es bekannt, ein Bauteil eines Flugtriebwerks durch Metallpulverspritzgießen herzustellen. Dabei wird zunächst eine Grünlingskomponente des herzustellenden Bauteils aus einem spritzgussfähigen Metallpulvergemisch hergestellt, das mit einem Binder vermischtes Metallpulver enthält. Der Grünling wird anschließend entbindert, wobei ein Bräunling des Bauteils entsteht. Der Bräunling wird gesintert, wobei es zu einer Schwindung des Bräunlings kommt, da sich die Partikel des Metallpulvergemisches beim Sinterprozess verdichten.

DE 103 31 599 A1 offenbart ein Verfahren zur Herstellung eines Bauteils einer Gasturbine durch Metallpulverspritzgießen, bei dem der Grünling beim Metallpulverspritzgießen mit einer Stützstruktur als integralem Bestandteil der Bauteilkonstruktion versehen wird, die die Bauteilkonstruktion beim Sintern stützt. Dieses Dokument offenbart jedoch nicht die teilweise oder vollständige Entfernung der sogenannten Stützstruktur. Die in diesem Dokument offenbarte Stützstruktur dient dazu die Steifigkeit des Bauteils zu optimieren.

Die Herstellung eines Bauteils eines Flugtriebwerkes durch Metallpulverspritzgießen kann vergleichsweise kostengünstig erfolgen, weswegen ein Interesse daran besteht, auf Metallpulverspritzgießen basierende Verfahren weiterzuentwickeln. In der Luftfahrt hat sich der Einsatz von pulvermetallurgischen Spritzgussverfahren bisher jedoch nicht in großem Umfang etablieren können. Ein Problem bei der Herstellung eines Bauteils eines Flugtriebwerks durch ein Metallpulverspritzgussverfahren besteht darin, dass es während des Sinterprozesses Zustände gibt, in denen die Form des Bauteils so weich und instabil wird, dass sich das Bauteil zum Beispiel aufgrund des eigenen Gewichtes oder aufgrund eines Gasflusses und weiterer Einflüsse verziehen kann und dementsprechend eine geänderte und von den Designvorgaben abweichende Form aufweist. Es besteht daher ein Bedarf, den pulvermetallurgischen Spritzguss für seine Eignung in der Fertigungstechnologie in der Luftfahrt weitergehend zu verbessern.

Der vorliegenden Erfindung liegt die Aufgabe zugrunde, ein Verfahren zur Herstellung eines Bauteils bereitzustellen, welches auf Metallpulverspritzgießen beruht und eine geometrische Änderung der Form des Bauteils während des Sinterprozesses weitgehend verhindern.

Diese Aufgabe wird erfindungsgemäß durch ein Verfahren zur Herstellung eines Bauteils einer Gasturbine mit den Merkmalen des Anspruchs 1 gelöst. Ausgestaltungen der Erfindungen sind in den Unteransprüchen angegeben.

Danach zeichnet sich die Offenbarung gemäß einem ersten Aspekt durch eine Bauteilkonstruktion aus, die geeignet und dafür vorgesehen ist, zu einem Bauteil einer Gasturbine weiterverarbeitet zu werden. Bei der Bauteilkonstruktion handelt es sich somit um ein Zwischenprodukt, das zu einem fertigen Bauteil einer Gasturbine weiter verarbeitbar ist. Es ist vorgesehen, dass die Bauteilkonstruktion durch Metallpulverspritzgießen und anschließendes Sintern hergestellt worden ist und eine Stützstruktur als integralen Bestandteil der Bauteilkonstruktion umfasst, die dazu geeignet ist, das Bauteil (d.h. diejenigen Bestandteile der Bauteilkonstruktion, die spätere fertige Bauteil betreffen) beim Sintern zu stützen und vor Verformung zu schützen. Die Stützstruktur ist beim fertig hergestellten Bauteil nicht mehr oder nicht mehr vollständig enthalten.

Die bereitgestellte spritzgussgerechte Stützstruktur gibt der Bauteilkonstruktion während des gesamten Sinterprozesses die notwendige Stabilität. Insbesondere ermöglicht die Stützstruktur, dass Relativbewegungen, die während des Sinterns und des damit einhergehenden Schrumpfens des Bauteils auftreten, aufgefangen und kompensiert werden können. Ein Verzug bzw. eine Verformung der Teile der Bauteilkonstruktion, die das herzustellende Bauteil bilden, wird dadurch verhindert.

Die Lösung ermöglicht es damit, eine generische konstruktive Lösung für das Problem der Verformung während des Sintervorganges zu erzielen. Die durch die Lösung bereitgestellte Stabilität der Bauteilkonstruktion ermöglicht eine robuste und hohe Fertigungswiederholungsgenauigkeit und führt damit zu reduzierten Kosten.

Gemäß einer Ausgestaltung der Offenbarung ist es vorgesehen, dass die Stützstruktur der Bauteilkonstruktion eine planare Auflagefläche aufweist, die es erlaubt, die Bauteilkonstruktion beim Sintern mit der planaren Auflagefläche nach unten auf einen planaren Untergrund aufzulegen. Die Stützstruktur kann dabei Rippen oder andere Verstärkungselemente aufweisen, deren Stirnseiten die planare Auflagefläche bilden. Durch diese Maßnahmen wird eine stabile Auflagefläche bereitgestellt, die Relativbewegungen während des Sinterns und Schrumpfens des Bauteils auffangen und kompensieren kann.

Die die Stützstruktur bildenden Rippen können beispielsweise ein Gitter bilden, um bei geringem Materialeinsatz eine hohe Stabilität bereitzustellen. Die Breite der Rippen beträgt beispielsweise zwischen 1 mm und 2 mm. Weiter kann vorgesehen sein, dass die Rippen sich zur Auflagefläche hin in ihrer Breite verjüngen, d.h. zur Auflagefläche hin konisch zusammenlaufen. Dies verbessert die Entnahmefähigkeit aus der Spritzgussform und führt zu einer weiteren Materialreduktion.

Die Bauteilkonstruktion umfasst gemäß einer Ausgestaltung der Offenbarung eine Fanschaufel oder eine Leit- oder Laufschaufel eines Verdichters oder einer Turbine einer Gasturbine. Bei der Gasturbine handelt es sich beispielsweise um ein Turbofantriebwerk. Dabei ist weiter vorgesehen, dass die Schaufel ein Schaufelblatt und ein Schaufelfuß aufweist und die Stützstruktur mit dem Schaufelfuß verbunden ist und/oder einen Teil des Schaufelfußes bildet. Sie bildet dabei insbesondere dann einen Teil des Schaufelfußes, wenn die Stützstruktur in den weiteren Herstellungsschritten zum Herstellen des Bauteils nur teilweise entfernt wird.

Gemäß einer Variante kann vorgesehen sein, dass der Schaufelfuß im Bereich der Vorderkante oder Hinterkante eine Aussparung aufweist, die zur Bereitstellung einer Zapfluftentnahme vorgesehen ist. Diese Aussparung ist dabei nicht Teil der Stützstruktur, sondern des eigentlichen Schaufelfußes.

Die Offenbarung betrifft in einem zweiten Aspekt ein Bauteil für eine Gasturbine, das die oben beschriebene Bauteilkonstruktion aufweist, bei der die Stützstruktur teilweise oder vollständig wieder entfernt worden ist, wodurch das Bauteil fertig hergestellt ist. Dieser Aspekt der Offenbarung betrachtet somit das aus der Bauteilkonstruktion hervorgehende Bauteil, bei dem die Stützstruktur teilweise oder vollständig entfernt worden ist.

In einer Ausgestaltung dieses Aspekts der Offenbarung basiert das Bauteil auf einer Bauteilkonstruktion, die eine Schaufel eines Fans oder eines Rotors oder eines Stators einer Gasturbine umfasst, wobei die Schaufel ein Schaufelblatt und einen Schaufelfuß aufweist und die Stützstruktur mit dem Schaufelfuß verbunden ist und/oder einen Teil des Schaufelfußes bildet. Das aus einer solchen Bauteilkonstruktion hervorgehende Bauteil ist dadurch gekennzeichnet, dass die Stützstruktur derart teilweise entfernt worden ist, dass ein Bereich der Stützstruktur im eingebauten Zustand des Bauteils einen Anschlag oder eine Aufnahme für ein Stoppelement bildet. Ein solches Stoppelement, das mit dem Anschlag oder der Aufnahme zusammenwirkt, ist mit einem Gehäuse der Gasturbine fest verbunden und dient dazu, im Zusammenwirken mit dem Anschlag oder der Aufnahme eine Bewegung des Bauteils in Umfangsrichtung der Gasturbine zu verhindern. So ist es erforderlich, eine Bewegung der einzelnen Schaufeln eines Stators, die in Umfangsrichtung benachbart angeordnet sind und dabei eine kreisförmige Anordnung bilden, in Umfangsrichtung zu verhindern. Der Anschlag oder die Aufnahme wird einstückig und als integraler Teil des Bauteils durch einen Bereich der Stützstruktur bereitgestellt.

Dabei ist gemäß einer Ausgestaltung der Offenbarung vorgesehen, dass die Aufnahme für das Stoppelement durch zwei parallel angeordnete Rippen der Stützstruktur gebildet ist. In die entsprechende Aufnahme greift das mit dem Gehäuse der Gasturbine verbundene Stoppelement formschlüssig ein.

Gemäß einer alternativen Ausgestaltung ist vorgesehen, dass die Stützstruktur der Bauteilkonstruktion vollständig entfernt wird. Hierdurch entsteht ein Bauteil, beispielsweise eine Schaufel, mit gewünschten Maßen. Weiter kann in einer Variante vorgesehen sein, dass zusätzlich zum Entfernen der Stützstruktur definierte Strukturen in den Schaufelfuß eingebracht werden. Beispielsweise kann zusätzlich eine Bohrung oder ein Teilabschnitt einer Bohrung in einen Schaufelfuß eingebracht werden, wobei die Bohrung das Durchführen eines Messgerätes, beispielsweises eines optischen Messgerätes, ermöglicht. Dies erlaubt es beispielsweise, im Betrieb der Gasturbine, in die das Bauteil eingebaut ist, Daten des Strömungskanals zu erfassen.

Die Erfindung betrifft ein Verfahren zur Herstellung eines Bauteils einer Gasturbine durch Metallpulverspritzgießen. Dabei wird ein Grünling einer Bauteilkonstruktion aus einem spritzgussfähigen Metallpulvergemisch, das mit einem Binder vermischtes Metallpulver enthält, durch Metallpulverspritzgießen hergestellt. Der Grünling wird zu einem Bräunling entbindert und anschließend gesintert. Das Verfahren zeichnet sich erfindungsgemäß dadurch aus, dass der Grünling beim Metallpulverspritzgießen mit einer Stützstruktur versehen wird, die einstückig mit der Bauteilkonstruktion ausgebildet ist und die Bauteilkonstruktion beim Sintern stützt, wobei die Stützstruktur nach Sintern der Bauteilkonstruktion zur Herstellung des Bauteils durch ein spanendes Verfahren vollständig entfernt wird oder derart teilweise entfernt wird, dass ein Bereich der Stützstruktur im eingebauten Zustand des Bauteils einen Anschlag oder eine Aufnahme für ein Stoppelement bildet, das mit einem Gehäuse der Gasturbine verbunden ist und in Zusammenwirken mit dem Anschlag oder der Aufnahme dazu dient, eine Bewegung des Bauteils in Umfangsrichtung der Gasturbine zu verhindern.

Dabei wird das Bauteil beim Sintern durch die Stützstruktur gemäß einer vorteilhaften Ausgestaltung derart gestützt, dass der Schrumpfvorgang des Bauteils während des Sinterns in allen Raumrichtungen ohne Verzug stattfinden kann.

Gemäß einer Ausgestaltung sichert die Stützstruktur während des Sinterns die Form des Schaufelfußes einer Schaufel, der in besonderem Maße in Gefahr steht, aufgrund des eigenen Gewichtes und des Gewichtes des Schaufelblattes, das der Schaufelfuß beim Sintern trägt, beim Sintern zu verformen.

Die Erfindung wird nachfolgend unter Bezugnahme auf die Figuren der Zeichnung anhand mehrerer Ausführungsbeispiele näher erläutert. Es zeigen:
- Figur 1A: in perspektivischer Darstellung ein erstes Ausführungsbeispiel einer Bauteilkonstruktion, die eine Schaufel einer Gasturbine betrifft und die eine integral mit dem Schaufelfuß ausgebildete Stützstruktur aufweist;
- Figur 1B: die Bauteilkonstruktion der Figur 1A in Seitenansicht;
- Figur 2: die Bauteilkonstruktion der Figuren 1A in einer Position, in der sie zum Sintern auf einen planaren Untergrund aufgelegt ist;
- Figur 3A: in perspektivischer Darstellung eine Schaufel, die durch vollständiges Entfernen der Stützstruktur aus der Bauteilkonstruktion der Figur 1A hervorgegangen ist;
- Figur 3B: eine Seitenansicht der Schaufel der Figur 3A;
- Figur 4: eine Schaufel entsprechend der Figur 3A, wobei zusätzlich im Bereich der einen Seitenkante eine Teilbohrung eingebracht ist;
- Figur 5: eine Schaufel entsprechend der Figur 3A, wobei zusätzlich im Bereich der anderen Seitenkante eine Teilbohrung eingebracht ist;
- Figur 6A: in perspektivischer Darstellung eine Schaufel, deren Schaufelfuß durch teilweises Entfernen der Stützstruktur aus der Bauteilkonstruktion der Figur 1A hervorgegangen ist, wobei die verbleibende Stützstruktur eine Aufnahme für ein Stoppelement bildet;
- Figur 6B: die Schaufel der Figur 6A in einer Ansicht von oben;
- Figur 7A: in perspektivischer Darstellung die Schaufel der Figur 6A mit in die Aufnahme eingeführtem Stoppelement;
- Figur 7B: die Schaufel der Figur 7A in einer Ansicht von vorne;
- Figur 8A: in perspektivischer Darstellung ein zweites Ausführungsbeispiel einer Bauteilkonstruktion, die eine Schaufel einer Gasturbine betrifft und die eine integral mit dem Schaufelfuß ausgebildete Stützstruktur aufweist;
- Figur 8B: die Bauteilkonstruktion der Figur 8A in einer Ansicht von oben nach Drehen der Bauteilkonstruktion der Figur 8A um 180°;
- Figur 9A: in perspektivischer Darstellung eine Schaufel, deren Schaufelfuß durch vollständiges Entfernen der Stützstruktur aus der Bauteilkonstruktion der Figur 8A hervorgegangen ist, unter zusätzlicher Darstellung einer Aussparung für eine Zapfluftentnahme;
- Figur 9B: die Schaufel der Figur 9A in einer Ansicht von oben nach Drehen der Schaufel der Figur 9A um 180°;
- Figur 10A: in perspektivischer Darstellung eine Schaufel, deren Schaufelfuß durch teilweises Entfernen der Stützstruktur aus der Bauteilkonstruktion der Figur 8A hervorgegangen ist, wobei die verbleibende Stützstruktur einen Anschlag für ein Stoppelement bildet; und
- Figur 10B: die Schaufel der Figur 10A in einer Seitenansicht.

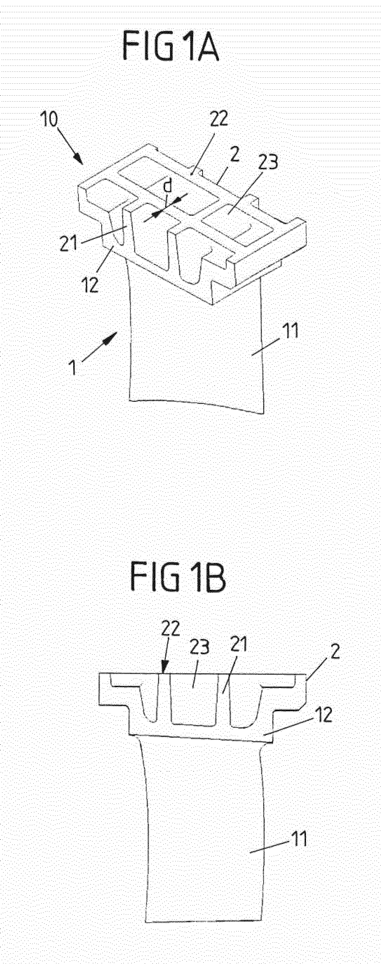

Die Figuren 1A, 1B zeigen ein erstes Ausführungsbeispiel einer Bauteilkonstruktion 10, die eine Leitschaufel betrifft und die eine in den Schaufelfuß integrierte Stützstruktur aufweist.

Die in den Figuren 1A, 1B dargestellte Bauteilkonstruktion ist auf der Grundlage eines pulvermetallurgischen Spritzgusses (auch als MIM (MIM = "Metal Injection Molding") bezeichnet) hergestellt. Dabei wird ein Grünling der Bauteilkonstruktion aus einem spritzgussfähigen Metallpulvergemisch, das mit einem Binder vermischtes Metallpulver enthält, durch Metallpulverspritzgießen in einer Spritzgießmaschine hergestellt. Die Bauteilkonstruktion wird anschließend entbindert, wobei ein Bräunling der Bauteilkonstruktion entsteht. Anschließend wird der Bräunling gesintert.

Bei einem solchen Verfahren besteht grundsätzlich die Gefahr, dass die Bauteilkonstruktion sich während des Sinterns in unerwünschter Weise verformt, da sie während des Sinterns weich und instabil wird. Dabei können sich Verformungen beispielsweise aufgrund des eigenen Gewichtes der Bauteilkonstruktion oder durch einen vorhandenen Gasfluss und weiterer Einflüsse ergeben. Eine solche Verformung wird bei der Bauteilkonstruktionen der Figuren 1A, 1B vermieden, indem die Bauteilkonstruktion 10 zusätzlich zu dem eigentlichen Bauteil 1, das im dargestellten Ausführungsbeispiel eine Schaufel betrifft und ein Schaufelblatt 11 und einen Schaufelfuß 12 umfasst, eine Stützstruktur 2 aufweist. Die Stützstruktur 2 stellt eine spritzgussgerechte Konstruktion dar und ist dazu geeignet und vorgesehen, dass eigentliche Bauteil 1 während des Sinterprozesses zu stützen, so dass sich das Bauteil 1 während des Sinterprozesses nicht verformt oder verzieht. Dabei kann auf der Stützstruktur der Schrumpfvorgang des eigentlichen Bauteils 1 beim Sintern in allen Richtungen ohne Verzug stattfinden.

Aufgrund des Herstellungsvorgangs durch Metallpulverspritzgießen ist dabei die Stützstruktur 2 integraler Bestandteil der Bauteilkonstruktion 10 und einstückig mit dem eigentlichen Bauteil 1 ausgebildet. Wie noch erläutert werden wird, wird die Stützstruktur 2 zum Herstellen des Bauteils 1 teilweise oder vollständig wieder entfernt, was durch spanende Verfahren erfolgt. Die in den Figuren 1A, 1B dargestellte Bauteilkonstruktion 10 stellt insofern ein Zwischenprodukt bei der Herstellung des Bauteils 1 dar.

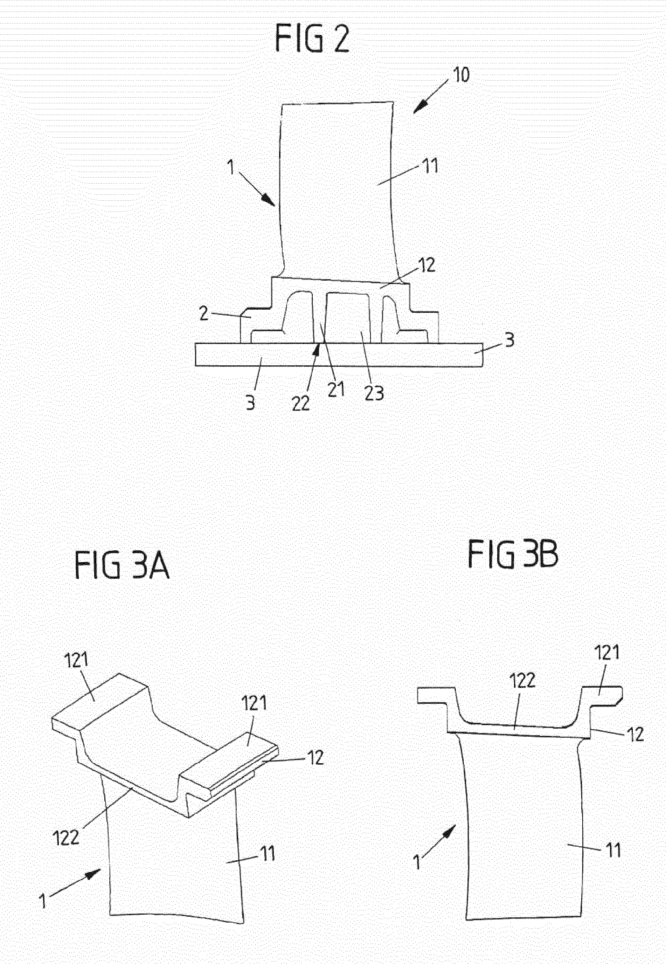

Die Stützstruktur 2 umfasst eine Mehrzahl von Rippen 21, die im Wesentlichen senkrecht vom Schaufelfuß 12 abstehen und dabei integral mit dem Schaufelfuß 12 ausgebildet sind und diesen abstützen. Die Rippen 21 bilden an ihren Stirnseiten eine planare Auflagefläche 22 aus, die es erlaubt, die Bauteilkonstruktion 10 beim Sintern mit der planaren Auflagefläche 22 nach unten auf einen planaren Untergrund zu legen. Eine solche Anordnung der Bauteilkonstruktion 10 beim Sintern ist in der Figur 2 dargestellt. Die Stützstruktur 2 liegt dabei mit ihrer Auflagefläche 22 auf einer planaren Auflage 3 auf, bei der es sich beispielsweise um eine Sinterkeramik handelt.

Erneut bezugnehmend auf die Figuren 1A, 1B wird darauf hingewiesen, dass die Rippen 21 der Stützstruktur 2 gitterförmig angeordnet sein können, wobei die Bereiche zwischen den Rippen 21 durch Aussparungen 23 gebildet sind. Die Aussparungen 23 können sich zur Auflagefläche 22 hin verbreitern, um eine gute Entfernbarkeit des Grünlings der Bauteilkonstruktion aus einer Spritzgießmaschine zu gewährleisten. Damit korrespondiert, dass die Breite der Rippen 21 zur Auflagefläche 22 hin leicht abnimmt, diese sich somit zur Auflagefläche 22 hin verjüngen.

Die Breite d der Rippen 21 liegt im Bereich der Auflagefläche 22 beispielsweise zwischen 1 und 2 mm, insbesondere zwischen 1,3 und 1,7 mm, beispielsweise bei 1,5 mm. Die Gesamtlänge der Stützstruktur 2 liegt dabei beispielsweise im Bereich zwischen 20 und 40 mm und die Gesamtbreite der Stützstruktur 2 im Bereich zwischen 10 und 20 mm.

Es wird darauf hingewiesen, dass statt Rippen 21 auch andere Verstärkungselemente wie beispielsweise Säulen oder dergleichen eingesetzt werden können. Sofern Rippen 21 eingesetzt werden, bilden diese wie dargestellt Wände, die sich zwischen dem Schaufelfuß 12 des eigentlichen Bauteils 1 und der planaren Auflagefläche 22 erstrecken und diese dabei bilden.

Die Stützfunktion der Bauteilkonstruktion ergibt sich anschaulich aus der Figur 2. Das betrachtete Bauteil 1 umfasst eine Struktur (den Schaufelfuß 12), die eine konkave Öffnung zu der planaren Auflage 3 ausbildet. Ohne die Stützstruktur 2 bestünde aufgrund des Eigengewichtes des Schaufelfußes 12 und des darüber angeordneten Schaufelblattes 11, das der Schaufelfuß 12 beim Sinterprozess ebenfalls trägt, die Gefahr des Verformens beim Sinterprozess, wenn die Komponente weich und damit instabil wird. Durch die Stützstruktur 2, insbesondere die Rippen 21 in Verbindung mit der stabilen Auflagefläche 22, werden Relativbewegungen des Materials während des Sinterprozesses und beim Schrumpfen des Bauteils aufgefangen und kompensiert und die Gefahr eines Verformens insbesondere des Schaufelfußes 12 verhindert.

Es wird darauf hingewiesen, dass die Schaufel 11 zusätzlich mit einem Deckband (nicht dargestellt) versehen sein kann.

Ausgehend von der Bauteilkonstruktion der Figur 1A können durch teilweises oder vollständiges Entfernen der Stützstruktur 2 verschiedene Ausführungsformen des eigentlichen Bauteils 1, im betrachteten Ausführungsbeispiel einer Statorschaufel abgeleitet werden, wie nachfolgend an Ausführungsbeispielen erläutert wird.

Die Figuren 3A, 3B zeigen eine Schaufel 1, die durch vollständiges Entfernen der Stützstruktur 2 aus der Bauteilkonstruktion der Figur 1A entstanden ist. Dabei umfasst die Schaufel 1 ein Schaufelblatt 11 und einen Schaufelfuß 12, der zwei seitliche Montageschultern 121 und eine mit dem Schaufelblatt 11 verbundene Plattform 122 aufweist. Die Rippen 21 der Stützstruktur 2 der Bauteilkonstruktion der Figur 1A wurden vollständig beispielsweise durch Fräsen oder andere spanende Verfahren entfernt. Auch wurde den Montageschultern 121 durch Fräsen oder andere spanende Verfahren die gewünschte Dicke gegeben.

Durch eine weitergehende Bearbeitung der Leitschaufel 1 kann diese weitergehend gestaltet werden, beispielsweise als sogenannte "Undersize-Leitschaufel", die durch Entfernen von Teilen der Plattform 122 eine reduzierte Plattformbreite aufweist.

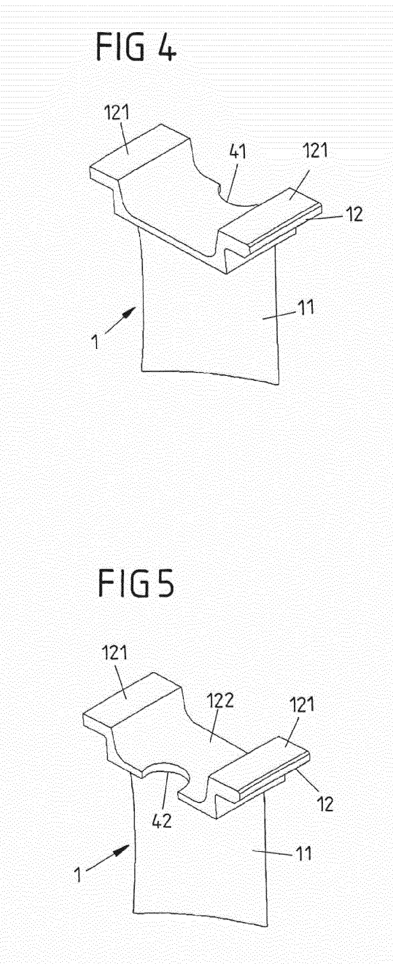

Die Figuren 4 und 5 zeigen zwei Weiterbildungen einer Leitschaufel gemäß den Figuren 3A, 3B, bei denen zusätzlich in dem Schaufelfuß 12 jeweils eine Teilbohrung 41, 42 eingebracht ist, die jeweils im Bereich einer der Längskanten der Plattform 122 ausgebildet sind. Bei Anordnung zweier Leitschaufeln gemäß den Figuren 4 und 5 nebeneinander bei bestimmungsgemäßer Anordnung der Leitschaufeln in einem Stator einer Gasturbine ergibt sich eine kreisförmige Aussparung, die beispielsweise dazu nutzbar ist, ein Messgerät, beispielsweise ein Endoskop zur Erfassung von Zuständen im Strömungskanal hindurch zu führen.

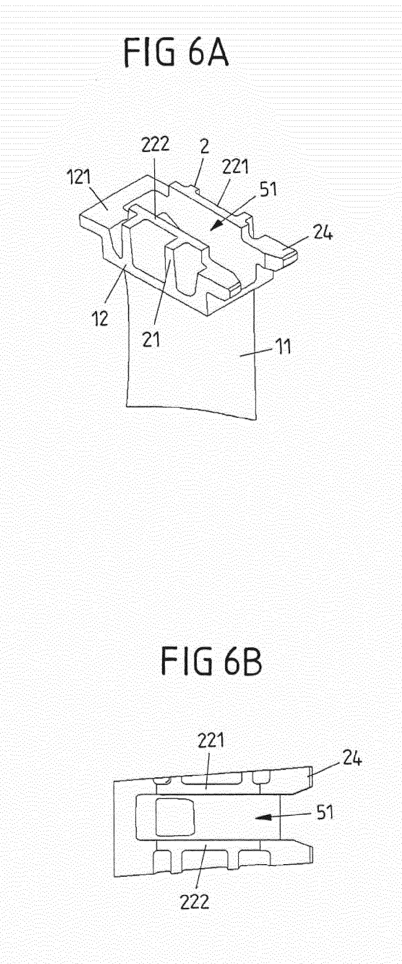

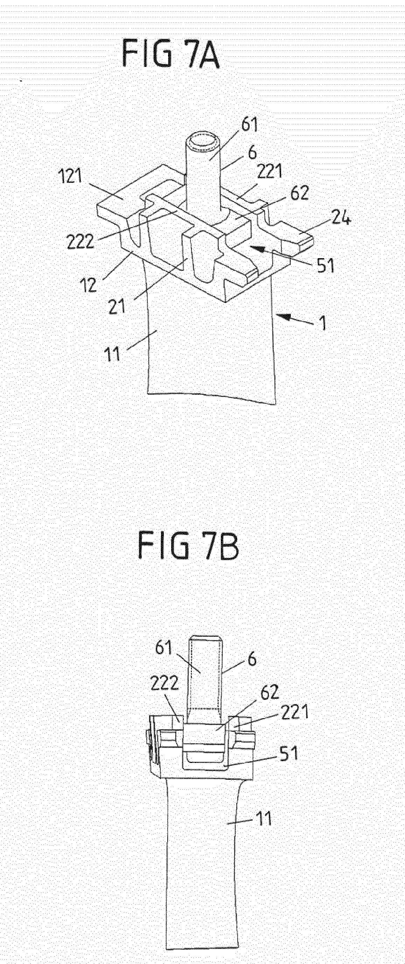

Die Figuren 6A, 6B zeigen eine Weiterbildung eines Bauteils, das durch teilweises Entfernen der Stützstruktur 2 aus der Bauteilkonstruktion 10 der Figur 1A hervorgegangen ist. Die Stützstruktur 2 ist dabei derart entfernt worden, dass die verbleibenden Strukturen eine Aufnahme 51 bilden, die dazu geeignet und vorgesehen ist, ein mit einem Gehäuse einer Gasturbine fest verbundenes Stoppelement aufzunehmen, wie anhand der Figuren 7A, 7B noch erläutert werden wird. Die Aufnahme 51 wird durch zwei stehengelassene Wände bzw. Rippen 221, 222 der Stützstruktur gebildet. Diese Wände werden durch dazu quer verlaufende Rippen 21 strukturell gestützt. Durch das teilweise Entfernen der Stützstruktur sind des Weiteren eine Montageschulter 121 des Schaufelfußes 12 sowie Auflageflächen 24 entstanden.

Es wird darauf hingewiesen, dass die Rippen 221, 222 in Längsrichtung der Schaufel 1 über die Ebene, die durch die Flächen 121, 24 definiert ist, hinaussteht.

Die Figuren 7A, 7B zeigen das Bauteil der Figur 6A mit in die Aufnahme 51 eingesetztem Stoppelement 6. Das Stoppelement 6 umfasst ein zylinderförmiges Teil 61 und eine Plattform 62, deren Abmessungen mit den Abmessungen der Aufnahme 51 korrespondieren. Das Stoppelement 6 ist mit einem Gehäuse einer Gasturbine verbunden und ragt nach bestimmungsgemäßem Einbau der Schaufel 1 in einen Stator einer Gasturbine in die Aussparung 51. Die Plattform 62 des Stoppelements 6 wird dabei durch Formschluss in der Aussparung 51 gehalten.

Damit verhindert die Schaufelgeometrie, nämlich die verbliebene Stützstruktur mit der Aufnahme 51 im Zusammenwirken mit dem Stoppelement 6 eine Bewegung der montierten Schaufel 1 in Umfangsrichtung des Gehäuses. Aufgrund der integralen Ausbildung der Aufnahme 51 in der Schaufelfußkonstruktion der Schaufel 1 kann diese Funktion dabei ohne Bereitstellung zusätzlicher, gesondert gefertigter Komponenten realisiert werden.

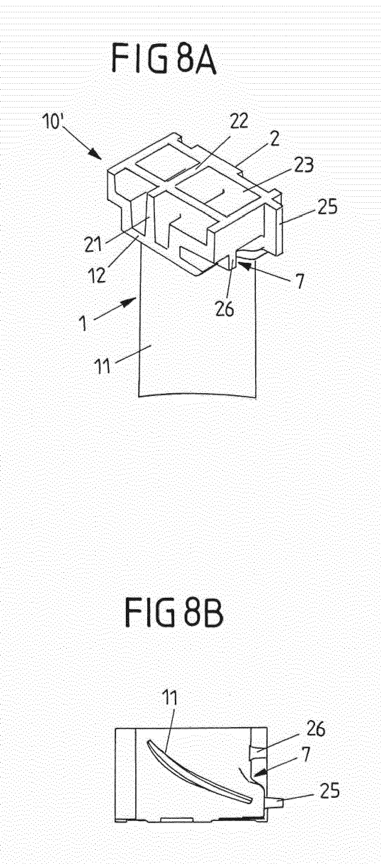

Die Figuren 8A, 8B zeigen eine zweite Weiterbildung einer Bauteilkonstruktion, die eine Statorschaufel einer Gasturbine betrifft, wobei eine gesonderte Stützstruktur 2 vorgesehen ist, die integral mit dem Schaufelfuß 12 ausgebildet ist. Der grundsätzliche Aufbau der Bauteilkonstruktion 10' ist der gleiche wie bei der Bauteilkonstruktion 10 der Figur 1A. Die Stützstruktur 10' umfasst eine Mehrzahl von Rippen 21, die rasterförmig angeordnet sind, eine planare Auflagefläche 22 bilden und zwischen sich Aussparungen 23 definieren. Die Schaufel 1 umfasst ein Schaufelblatt 11 und einen Schaufelfuß 12. Die Bauteilkonstruktion der Figuren 8A, 8B zeigt beispielhaft, dass Variationen in Anzahl, Größe und Anordnung der Rippen 21 oder anderer Verstärkungselemente vorgesehen sein können.

Bei der Bauteilkonstruktion der Figuren 8A, 8B ist im Bereich der Vorderkante oder der Hinterkante des Schaufelfußes 12 zusätzlich eine Aussparung 7 vorgesehen, die im eingebauten Zustand des Bauteils beispielsweise einer Zapfluftentnahme dient.

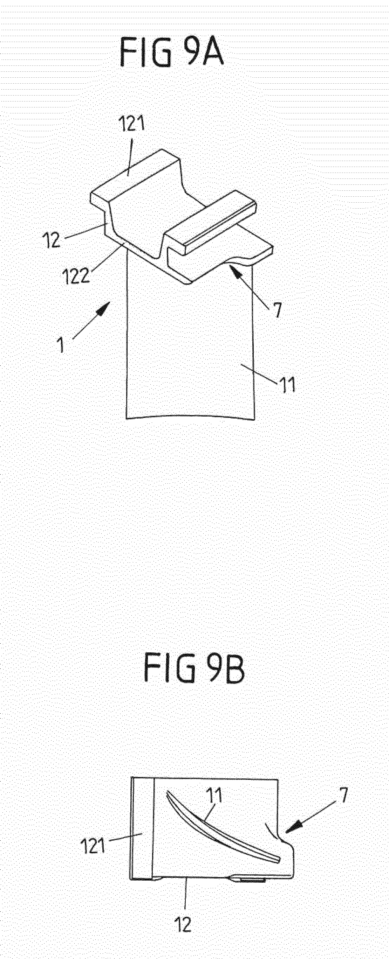

Die Figuren 9A, 9B zeigen eine Leitschaufel 1 nach vollständigem Entfernen der Stützstruktur 2 der Figur 8A, wobei ähnlich wie bei den Figuren 3A, 3B ein Schaufelfuß 12 mit einer Plattform 122 und zwei Montageschultern 121 entsteht, die sich in einer anderen Ebene als die Plattform 122 befinden. Des Weiteren ist nach Entfernen der Stützstruktur die an der Vorderkante oder Hinterkante ausgebildete Aussparung 7 zur Entnahme von Zapfluft zu erkennen.

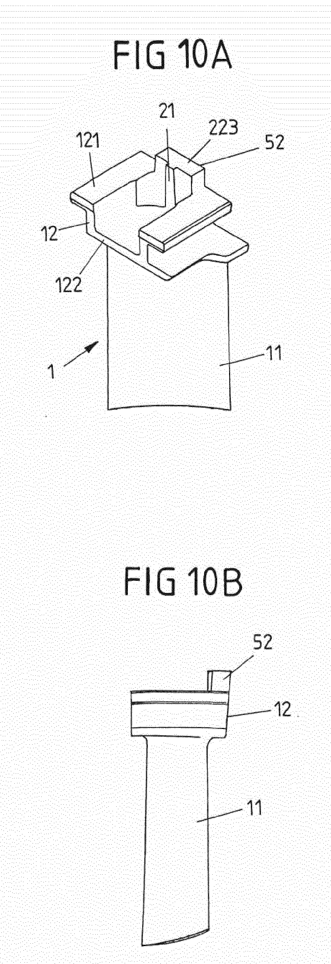

Die Figuren 10A, 10B zeigen eine weitere Ableitung aus der Bauteilkonstruktion der Figuren 8A, 8B. Bei dieser Ableitung ist die Stützstruktur der Figuren 8A, 8B bis auf einen Wandbereich 223 entfernt worden. Dieser Wandbereich 223 stellt einen Anschlag 52 für ein Stoppelement bereit, das mit einem Gehäuse einer Gasturbine fest verbunden ist, entsprechend dem Stoppelement 6 der Figuren 7A, 7B. Bis auf diesen Anschlag 52 entspricht die Schaufelfußkonstruktion dem Schaufelfuß der Figuren 9A, 9B mit einer Plattform 122 und zwei Montageschultern 121. Der durch den Wandbereich 221 gebildete Anschlag 52 kann durch eine querverlaufende Rippe 21 strukturell verstärkt sein. Der Anschlag 52 ragt über die durch die beiden Montageschultern 121 gebildete Ebene hinaus.

Das erfindungsgemäße Verfahren zur Herstellung eines Bauteils einer Gasturbine durch Metallpulverspritzgießen wurde in den Figuren anhand eines Bauteils beschrieben, bei dem es sich um eine Statorschaufel eines Verdichters oder einer Turbine einer Gasturbine, insbesondere eines Turbofantriebwerks handelt. Die Prinzipien der vorliegenden Erfindung gelten jedoch in gleicher Weise für Schaufel eines Fans oder Schaufeln eines Rotors einer Gasturbine.

## Patentansprüche

1. Verfahren zur Herstellung eines Bauteils einer Gasturbine durch Metallpulverspritzgießen, bei dem ein Grünling einer Bauteilkonstruktion (10, 10') aus einem spritzgussfähigen Metallpulvergemisch durch Metallpulverspritzgießen hergestellt, zu einem Bräunling entbindert und anschließend gesintert wird,
**dadurch gekennzeichnet,**
**dass** der Grünling beim Metallpulverspritzgießen mit einer Stützstruktur (2) als integralem Bestandteil der Bauteilkonstruktion versehen wird, die einstückig mit der Bauteilkonstruktion (10, 10') ausgebildet ist und die Bauteilkonstruktion (10, 10') beim Sintern stützt, und die Stützstruktur (2) nach dem Sintern der Bauteilkonstruktion (10, 10') zur Herstellung des Bauteils (1) durch ein spanendes Verfahren vollständig entfernt wird oder derart teilweise entfernt wird, dass ein Bereich der Stützstruktur im eingebauten Zustand des Bauteils (1) einen Anschlag (52) oder eine Aufnahme (51) für ein Stoppelement (6) bildet, das mit einem Gehäuse der Gasturbine verbunden ist und in Zusammenwirken mit dem Anschlag (52) oder der Aufnahme (51) dazu dient, eine Bewegung des Bauteils (1) in Umfangsrichtung der Gasturbine zu verhindern.

2. Verfahren nach Anspruch 1, **dadurch gekennzeichnet, dass** die Stützstruktur (2) eine planare Auflagefläche (22) aufweist und die Bauteilkonstruktion (10, 10') beim Sintern mit der planaren Auflagefläche (22) auf einem planaren Untergrund (3) aufliegt.

3. Verfahren nach Anspruch 1 oder 2, **dadurch gekennzeichnet, dass** das Bauteil (1) beim Sintern durch die Stützstruktur (22) gestützt wird und hierdurch der Schrumpfvorgang des Bauteils (1) während des Sinterns in allen Raumrichtungen ohne Verzug stattfindet.

4. Verfahren nach Anspruch 2, **dadurch gekennzeichnet, dass** die Stützstruktur (2) Verstärkungselemente (21) aufweist, deren Stirnseiten die planare Auflagefläche (22) bilden.

5. Verfahren nach Anspruch 4, **dadurch gekennzeichnet, dass** die Stützstruktur (2) Rippen (21) als Verstärkungselemente aufweist und die Rippen (21) ein Gitter bilden.

6. Verfahren nach Anspruch 5, **dadurch gekennzeichnet, dass** die Rippen (21) sich zur Auflagefläche (22) hin in ihrer Breite verjüngen.

7. Verfahren nach einem der vorangehenden Ansprüche, **dadurch gekennzeichnet, dass** die Bauteilkonstruktion (10, 10') eine Schaufel (1) eines Fans oder eines Rotors oder Stators einer Gasturbine aufweist, wobei die Schaufel (1) ein Schaufelblatt (11) und einen Schaufelfuß (12) umfasst und die beim fertig hergestellten Bauteil nicht vollständig enthaltene Stützstruktur (2) mit dem Schaufelfuß (12) verbunden ist.

8. Verfahren nach Anspruch 7, **dadurch gekennzeichnet, dass** der Schaufelfuß (12) im Bereich seiner Vorderkante oder Hinterkante eine Aussparung (7) zur Bereitstellung einer Luftentnahme aufweist.

9. Verfahren nach einem der vorangehenden Ansprüche, **dadurch gekennzeichnet, dass** die Aufnahme (51) für das Stoppelement durch zwei parallel angeordnete Rippen (221, 222) der Stützstruktur (2) gebildet ist.

10. Verfahren nach einem der Ansprüche 1 bis 8, **dadurch gekennzeichnet, dass** die Stützstruktur (2) unter Ausbildung eines Schaufelfußes (12) vollständig entfernt wird.

11. Verfahren nach einem der Ansprüche 1 bis 8, **dadurch gekennzeichnet, dass** die Stützstruktur (2) unter Ausbildung eines Schaufelfußes (12) vollständig entfernt und zusätzlich in den Schaufelfuß (12) mindestens eine Bohrung (41, 42) eingebracht wird, die das Durchführen eines Messgeräts ermöglicht.

## Claims

1. Method for manufacturing a component of a gas turbine by metal powder injection moulding, in which a green blank of a component construction (10, 10') is produced from an injection-mouldable metal powder mixture by metal powder injection moulding, is debinded to form a brown blank and is subsequently sintered,
**characterized**
**in that**, during the metal powder injection moulding, the green blank is provided with a supporting structure (2) as an integral component part of the component construction, which is formed in one piece with the component construction (10, 10') and supports the component construction (10, 10') during the sintering and, after the sintering of the component construction (10, 10') for manufacturing the component (1), the supporting structure (2) is completely removed by a machining process or is partially removed in such a way that, in the installed state of the component (1), a region of the supporting structure forms an end stop (52) or a receptacle (51) for a stopping element (6), which is connected to a housing of the gas turbine and, acting together with the end stop (52) or the receptacle (51), serves for preventing a movement of the component (1) in the circumferential direction of the gas turbine.

2. Method according to Claim 1, **characterized in that** the supporting structure (2) has a planar bearing surface (22) and, during the sintering, the component construction (10, 10') lies with the planar bearing surface (22) on a planar base (3).

3. Method according to Claim 1 or 2, **characterized in that**, during the sintering, the component (1) is supported by the supporting structure (22) and, as a result, the shrinking process of the component (1) during the sintering takes place in all spatial directions without any delay.

4. Method according to Claim 2, **characterized in that** the supporting structure (2) has reinforcing elements (21), the front sides of which from the planar bearing surface (22).

5. Method according to Claim 4, **characterized in that** the supporting structure (2) has ribs (21) as reinforcing elements and the ribs (21) form a grid.

6. Method according to Claim 5, **characterized in that** the ribs (21) narrow in their width towards the bearing surface (22).

7. Method according to one of the preceding claims, **characterized in that** the component construction (10, 10') comprises a blade (1) of a fan or of a rotor or stator of a gas turbine, wherein the blade (1) comprises an aerofoil (11) and a blade root (12) and the supporting structure (2), which is not completely contained in the finished manufactured component, is connected to the blade root (12).

8. Method according to Claim 7, **characterized in that** the blade root (12) has, in the region of its leading edge or trailing edge, a recess (7) for providing air extraction.

9. Method according to one of the preceding claims, **characterized in that** the receptacle (51) for the stopping element is formed by two parallel arranged ribs (221, 222) of the supporting structure (2).

10. Method according to one of the Claims 1 to 8, **characterized in that** the supporting structure (2) is completely removed, while forming a blade root (12) .

11. Method according to one of Claims 1 to 8, **characterized in that** the supporting structure (2) is completely removed, while forming a blade root (12), and in addition at least one bore (41, 42) that allows a measuring instrument to be led through is introduced into the blade root (12).

## Revendications

1. Procédé de fabrication d'un composant d'une turbine à gaz par moulage par injection de poudre métallique, dans lequel une pièce verte d'une structure de composant (10, 10') est fabriquée par moulage par injection de poudre métallique à partir d'un mélange de poudre métallique moulable par injection, déliantée en une pièce marron et ensuite frittée,
**caractérisé en ce que**
l'pièce verte est, lors du moulage par injection de poudre métallique, dotée d'une structure de support (2) en tant que partie intégrante de la structure de composant, qui est réalisée d'un seul pièce avec la structure de composant (10, 10') et supporte la structure de composant (10, 10') lors du frittage, et la structure de support (2) est, après le frittage de la structure de composant (10, 10'), retirée complètement par un procédé d'enlèvement de copeaux pour la fabrication du composant (1) ou retirée partiellement de telle sorte qu'une région de la structure de support forme, à l'état installé du composant (1), une butée (52) ou un logement (51) pour un élément d'arrêt (6) qui est relié à un carter de la turbine à gaz et qui, en coopération avec la butée (52) ou le logement (51), sert à empêcher un déplacement du composant (1) dans la direction périphérique de la turbine à gaz.

2. Procédé selon la revendication 1, **caractérisé en ce que** la structure de support (2) comprend une surface d'appui plane (22) et la structure de composant (10, 10') repose par la surface d'appui plane (22) sur une base plane (3) lors du frittage.

3. Procédé selon la revendication 1 ou 2, **caractérisé en ce que** le composant (1) est supporté par la structure de support (22) lors du frittage et ainsi l'opération de retrait du composant (1) pendant le frittage a lieu dans toutes les directions spatiales sans retard.

4. Procédé selon la revendication 2, **caractérisé en ce que** la structure de support (2) comprend des éléments de renforcement (21) dont les côtés frontaux forment la surface d'appui plane (22).

5. Procédé selon la revendication 4, **caractérisé en ce que** la structure de support (2) comprend des nervures (21) comme éléments de renforcement et les nervures (21) forment une grille.

6. Procédé selon la revendication 5, **caractérisé en ce que** les nervures (21) se rétrécissent sur leur largeur en direction de la surface d'appui (22).

7. Procédé selon l'une des revendications précédentes, **caractérisé en ce que** la structure de composant (10, 10') comprend une aube (1) d'un ventilateur ou d'un rotor ou d'un stator d'une turbine à gaz, l'aube (1) comportant une pale d'aube (11) et un pied d'aube (12) et la structure de support (2) non complètement contenue en cas de composant fabriqué de manière finie étant reliée au pied d'aube (12).

8. Procédé selon la revendication 7, **caractérisé en ce que** le pied d'aube (12) comprend, dans la région de son bord avant ou de son bord arrière, un évidement (7) destiné à produire un prélèvement d'air.

9. Procédé selon l'une des revendications précédentes, **caractérisé en ce que** le logement (51) pour l'élément d'arrêt est formé par deux nervures (221, 222) disposées parallèlement de la structure de support (2).

10. Procédé selon l'une des revendications 1 à 8, **caractérisé en ce que** la structure de support (2) est retirée complètement avec formation d'un pied d'aube (12).

11. Procédé selon l'une des revendications 1 à 8, **caractérisé en ce que** la structure de support (2) est retirée complètement avec formation d'un pied d'aube (12) et en outre au moins un alésage (41, 42) est ménagé dans le pied d'aube (12), lequel alésage permet le passage d'un appareil de mesure.
